# EUROPÄISCHE PATENTANMELDUNG

(11) **EP 0 952 373 A2**
(43) Veröffentlichungstag der Anmeldung: **27.10.1999**
(21) Anmeldenummer: 99105930.4
(22) Anmeldetag: 24.03.1999
(51) Int. Cl.: F16F 15/129

(54) **Reibscheibendämpfer**

(30) Priorität: 22.04.1998 DE 19817907
(71) Anmelder: Rohs-Voigt Patentverwertungsgesellschaft mbH, 52351 Düren (DE)
(72) Erfinder: Rohs, Ulrich Dr.-Ing., 52351 Düren (DE); Rohs, Hans, 52351 Düren (DE); Heidingsfeld, Dietmar Dipl.-Ing., 52078 Aachen (DE)
(74) Vertreter: Castell, Klaus, Dr.

(57) **Zusammenfassung**

Zur Bereitstellung eines kompakten Reibscheibendämpfers mit einer Primärmasse (1) und einer Sekundärmasse (2), die über eine Reibeinrichtung (3',3") miteinander wechselwirken, wobei eine drehzahlabhängige Steuerung der Reibung vorgesehen ist, wird vorgeschlagen, daß die Reibeinrichtung eine im wesentlichen radial zu beaufschlagende Anlage (9',9") aufweist und die Reibungssteuerung ein Federelement (7) umfaßt, welches mit drehzahlabhängiger Kraft im wesentlichen radial auf die Anlage wirkt. Darüber hinaus wird vorgeschlagen, daß die Reibeinrichtung reibend mit der Sekundärmasse wechselwirkt und wenigstens um einen kleinen Winkel drehbeweglich bezüglich der Primärmasse gelagert ist und daß die Reibungssteuerung ein drehzahlabhängiges Koppelelement zwischen der Primärmasse und der Reibeinrichtung umfaßt.

## Beschreibung

Die Erfindung betrifft einen Reibscheibendämpfer mit einer Primärmasse und einer Sekundärmasse, die über eine Reibeinrichtung miteinander wechselwirken, wobei eine drehzahlabhängige Steuerung der Reibung vorgesehen ist.

Ein derartiger Reibscheibendämpfer ist unter anderem aus der DE 196 11 268 A1 bekannt. Bei diesem Reibscheibendämpfer trägt ein Primärteil eine Anzahl axial hintereinander angeordneter und bewegbarer Lamellenringe, die jeweils zwischen axial bewegbar mit dem Sekundärteil verbundene Lamellenringe eingreifen. Hierbei werden die Lamellenringe durch axial drückende Blattfedern aneinander gedrückt, an deren äußeren, axialen Enden Fliehgewichte vorgesehen sind. Hierdurch wird eine mit wachsender Drehzahl abnehmende Andrückkraft auf die Lamellenringe bewirkt, so daß die Andrückkraft und somit auch die Reibung bei Überschreiten einer kritischen Drehzahl auf Null geht.

Jedoch wird für die Fliehgewichte ein verhältnismäßig großer Raum benötigt. Hierdurch wird der ansich für Dämpfungsfedern benötigte Platz reduziert. Insofern ist es Aufgabe vorliegender Erfindung, einen Reibscheibendämpfer mit einer Primärmasse und einer Sekundärmasse, die über eine Reibeinrichtung miteinander wechselwirken, wobei eine drehzahlabhängige Steuerung der Reibung vorgesehen ist, bereitzustellen, bei welcher ausreichend Platz für Dämpfungsfedern vorhanden ist.

Als Lösung schlägt vorliegende Erfindung einerseits einen gattungsgemäßen Reibscheibendämpfer vor, bei welchem die Reibeinrichtung eine im wesentlichen radial zu beaufschlagende Anlage aufweist, und die Reibungssteuerung ein Federelement umfaßt, welches mit drehzahlabhängiger Kraft im wesentlichen radial auf die Anlage wirkt.

Im Gegensatz zu den bekannten Anordnungen, bei welchen die Reibung mittels einer axial beaufschlagten Anlage gesteuert wird, ermöglicht die erfindungsgemäße Anordnung, auf Platz raubende und komplexe, radial wirkende und Fliehkräfte in axiale Kräfte umwandelnde Mechanismen zu verzichten. Vielmehr kann das Federelement unmittelbar auf die Anlage wirken, wobei seine Anpreßkraft durch die Fliehkräfte bedingt, ohne weitere Maßnahmen drehzahlabhängig ist.

Vorteilhafterweise ist die Anlage bei niedrigen Drehzahlen des Reibscheibendämpfers von radial außen durch das Federelement beaufschlagt. Dieses bedingt bei niedrigen Drehzahlen eine hohe Reibungskraft und somit eine hohe Dämpfung, die zur Vermeidung einer Überhöhung der Drehbeschleunigung, insbesondere bei Resonanzdurchgang, zwischen Primär- und Sekundärmasse notwendig ist.

Bei hohen Drehzahlen wirken auf das Federelement Zentrifugalkräfte, so daß die auf die Anlage wirkende Kraft und somit auch die Reibung reduziert wird. Auf diese Weise kann bei hohen Drehzahlen die Dämpfung in gewünschter Weise reduziert und eine möglichst reibungsfreie Relativbewegung zwischen Primär- und Sekundärmasse gewährleistet werden.

Eine besonders kompakte Ausgestaltung dieser Anordnung folgt, wenn die Reibeinrichtung zumindest bei niedrigem Drehmoment mit der Sekundärmasse reibend wechselwirkt und mit der Primärmasse antriebsverbunden ist. Hierbei versteht es sich, daß die Antriebsverbindung zwischen Reibeinrichtung und Primärmasse keine starre Verbindung sein muß. Diese kann vorzugsweise durch eine Federanordnung , z. B. auch die Dämpfungsfedern oder aber auch durch ein drehzahlabhängiges Koppelelement geschehen.

Insofern schlägt vorliegende Erfindung als Lösung für die vorgenannte Aufgabe desweiteren einen gattungsgemäßen Reibscheibendämpfer vor, bei welchem die Reibeinrichtung reibend mit der Sekundärmasse wechselwirkt und wenigstens in einem kleinen Winkel drehbeweglich bezüglich der Primärmasse gelagert ist und bei welchem die Reibungssteuerung ein drehzahlabhängiges Koppelelement zwischen der Primärmasse und der Reibeinrichtung umfaßt.

Eine derartige Anordnung gewährleistet auch unabhängig von den übrigen vorgenannten Merkmalen einen kompakten Aufbau eines Reibscheibendämpfers. Während bei den Anordnungen nach den Stand der Technik durch die Reibungssteuerung die zur Reibung notwendigen Kräfte erzeugt werden, braucht das erfindungsgemäße, drehzahlabhängige Koppelelement nur die zur Mitnahme der Reibeinrichtung notwendigen Kräfte aufzubringen. Aus diesen Grunde kann es wesentlich kompakter ausgestaltet werden.

Die drehbewegliche Lagerung der Reibeinrichtung bezüglich der Primärmasse ermöglicht einen Freiheitsgrad der Reibeinrichtung bezüglich der Primärmasse, wenn das drehzahlabhängige Koppelelement die Kopplung Primärmasse und Reibeinrichtung freigibt.

Vorzugsweise umfaßt das drehzahlabhängige Koppelelement ein radial wirksames Federelement. Auf diese Weise läßt sich die erfindungsgemäße Anordnung besonders einfach realisieren.

Liegt das radial wirksame Federelement radial von außen an einer Anlage der Reibeinrichtung und/oder der Primärmasse an, so folgt eine drehzahlabhängige Kopplung, die sich bei hohen Drehzahlen löst. Hierdurch wird auf verhältnismäßig einfache Weise eine hohe Dämpfung bei niedrigen Drehzahlen und eine niedrige Dämpfung bei hohen Drehzahlen gewährleistet, was - wie oben bereits erläutert - für derartige Reibscheibendämpfer erwünscht ist.

Um eine zuverlässige Antriebsverbindung zwischen Primärmasse und Reibeinrichtung zu gewährleisten, kann das radial wirksame Federelement durch einen Mitnehmer der Primärmasse oder der Reibeinrichtung mit entweder der Primärmasse oder der Reibeinrichtung drehantriebsverbunden sein.

Es versteht sich, daß es bei vorliegender Erfindung keinerlei Rolle spielt, ob die Primärmasse oder die Sekundärmasse antreibendes bzw. abtreibendes Element des Reibscheibendämpfers ist. Darüber hinaus ist es selbstverständlich, daß vorliegende Erfindung auch für andere Arten Torsionsschwingungsdämpfer vorteilhaft Anwendung finden kann.

Eine Steuerung der Reibung läßt sich auf einfache Weise dadurch realisieren, daß der Reibscheibendämpfer Mittel aufweist, die in wenigstens eine Richtung eine Relativdrehung zwischen Reibeinrichtung und Sekundärmasse begrenzen. Auf diese Weise tritt nur bis zu diesen Punkt die definierte Reibung zwischen Reibeinrichtung und Sekundärmasse auf, während darüberhinausgehende Verdrehungen zwischen Primärmasse und Sekundärmasse anders und somit auch mit anderem Reibungskoeffizienten begegnet werden kann.

Eine einfache Anordnung zur Begrenzung der Relativdrehung folgt, wenn die Begrenzungsmittel einen Anschlag an der Reibeinrichtung und einen Anschlag an der Sekundärmasse umfassen, die bei einem bestimmten Drehwinkel gegenseitig zur Anlage kommen.

Vorteilhafterweise greift das radial wirksame Federelement reibend an dem im wesentlichen radial zu beaufschlagenden Anlage an. Dies hat den Vorteil, daß es sich bei entsprechender Drehzahl leicht von der Anlage abhebt. Insbesondere ist bei dieser Anordnung auch eine reibende Verlagerung zwischen Federlement und Anlage möglich. So kann zum Beispiel, wenn ein verhältnismäßig hohes Drehmoment aufgebracht wird und eine Relativdrehung zwischen Reibeinrichtung und Sekundärmasse begrenzt ist, die Reibeinrichtung trotz anliegenden Federelements gegenüber der Primärmasse verlagert werden. Dieses geschieht dann mit einem verhältnismäßig hohen Widerstand, was dem Erfordernis entspricht, bei niedriger Drehzahl und hohen Drehmomenten eine hohe Dämpfung zu erreichen. Sobald die Drehzahl einen bestimmten Wert übersteigt, löst sich das Federelement und die Reibung zwischen Reibeinrichtung und Primärmasse sinkt auf einen erwünscht niedrigen Wert.

Eine besonders kompakte Anordnung eines erfindungsgemäßen Reibscheibendämpfers folgt, wenn die Reibeinrichtung eine Reibscheibe umfaßt, die mit einer radialen Fläche an der Sekundärmasse reibt. Bei einer derartigen Anordnung kann der äußere Rand der Reibscheibe als im wesentlichen radial zu beaufschlagende Anlage dienen.

Vorteilhafterweise ist die Reibscheibe in axialer Richtung weich ausgebildet, so daß eine gute Anlage der Reibscheibe an der Sekundärmasse und somit eine gute Reibung gewährleistet ist.

Andererseits ist es vorteilhaft, wenn die Reibscheibe in ihrer Scheibenebene steif ausgebildet ist. Hierdurch lassen sich Verwindungen reduzieren, und es wird eine gute Dämpfung der Gesamtanordnung gewährleistet.

Ein platzsparender Aufbau läßt sich erreichen, wenn das Federelement einen Federring umfaßt, der in radialer Richtung dehnbar ist. Ein derartiger Federring kann radial umlaufend an einer oder mehreren, im wesentlichen radial zu beaufschlagenden Anlagen anliegen. Hierbei verbraucht ein derartiger Federring nur einen geringen Raum und kann insbesondere auch außerhalb des Raumes für die Dämpfungsfedern des Reibscheibendämpfers vorgesehen sein. Somit wird durch eine derartige Anordnung der für die Dämpfungsfedern vorhandene Raum nicht bzw. nur sehr unwesentlich eingeschränkt.

Insbesondere kann der Federring einen geschlitzten, vorzugsweise metallischen, Ring umfassen. Weist der Federring desweiteren eine Feder auf, die beidseits des Schlitzes an dem Ring angebracht ist und die den Ring an seinen den Schlitz begrenzenden Enden zusammenzieht, folgt eine besonders kostengünstige Anordnung, die dennoch die erforderlichen Feder- bzw. Anpreßkräfte aufbringt.

Andererseits kann der geschlitzte Ring auch radial außen von einer umlaufenden Feder, vorzugsweise einer Spiralfeder oder einer Blattfeder, umschlossen sein. Darüber hinaus kann der Federring - auch unabhängig von dem Vorhandensein eines geschlitzten Ringes - ein meanderförmiges Band oder eine meanderförmige Vierkantschleife umfassen, wobei auch an dem Band bzw. an der Vierkantschleife noch weitere Federelemente, wie eine Spiralfeder oder Blattfeder, vorgesehen sein können.

Vorteilhafterweise weist der Federring zumindest eine Baugruppe aus Messing auf oder besteht zur Gänze aus diesem Material. Dieses hat den Vorteil, daß wegen des hohen Eigengewichtes von Messing bereits bei geringeren Drehzahlen ausreichend hohe Fliehkräfte zum Tragen kommen. Es versteht sich, daß statt Messing auch andere Materialien mit ähnlich hohem oder höherem Eigengewicht gewählt werden können. Dieses sollte insbesondere höher als das Eigengewicht von Stahl sein.

Um die Montage des Federringes zu erleichtern, kann dieser im Querschnitt radial innen eine konvexe Oberfläche aufweisen. Auf diese Weise kann er einfacher auf die ihn lagernde Baugruppe, wie zum Beispiel die Anlage oder die Anlagen, aufgeschoben werden. Aus demselben Grunde ist es vorteilhaft, wenn die Anlage der Reibeinrichtung radial außen eine konkave Oberfläche aufweist. So kann der Federring in die durch die konkave Oberfläche gebildete Halbschale bei der Montage hineingleiten und ruht dann stabil auf der Anlage.

Die Begriffe der konkaven bzw. konvexen Oberfläche sind in vorliegendem Zusammenhang sehr weit zu verstehen. Sie umfassen insbesondere auch polygonale Flächenstrukturen und Oberflächenteilbereiche, die konvex bzw. konkav angeordnet oder ausgerichtet sind.

Durch eine Variation der zur Anlage kommenden Oberflächenbereiche von Federelement bzw. drehzahlabhängigem Koppelelement und Anlage der Reibeinrichtung kann desweiteren die Reibung zwischen Anlage der Reibeinrichtung und Federelement bzw. drehzahlabhängigem Koppelelement den Erfordernissen angepaßt werden. Dieses kann insbesondere durch Variation der Oberflächenneigung der Anlage geschehen.

Darüber hinaus kann auch zwischen der Reibeinrichtung und der Primärmasse eine definierte Reibung vorgesehen sein, so daß selbst bei gelöstem Federelement bzw. drehzahlabhängigem Koppelelement eine gewisse Grundreibung zwischen Primärmasse und Reibeinrichtung vorhanden ist.

Weitere Vorteile, Ziele und Eigenschaften eines erfindungsgemäßen Reibscheibendämpfers werden nachfolgend anhand der Beschreibung anliegender Zeichnung näher erläutert, in welcher beispielhaft ein erfindungsgemäßer Reibscheibendämpfer dargestellt ist.

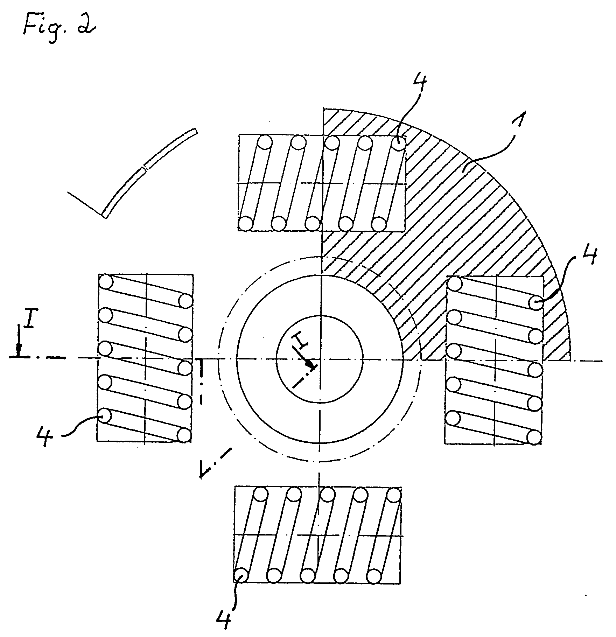

In der Zeichnung zeigen
- Figur 1: den Reibscheibendämpfer im Schnitt entlang der Linie I-I nach Figur 2,
- Figur 2: die Primärmasse des Reibscheibendämpfers nach Figur 1 in schematischer Seitenansicht,
- Figur 3: die Sekundärmasse des Reibscheibendämpfers nach Figur 1 in schematischer Seitenansicht,
- Figur 4: die rechte Reibscheibe des Reibscheibendämpfers nach Figur 1 in schematischer Seitenansicht,
- Figuren 5 bis 11: verschiedene Verdrehwinkel zwischen Primärmasse und Sekundärmasse in ähnlicher Darstellung wie Figuren 2 bis 4,
- Figur 12: eine perspektivische Ansicht des in Figur 1 dargestellten Federrings,
- Figur 13: eine Aufsicht auf einen weiteren Federring.
- Figur 14: einen dritten Federring im Schnitt,
- Figur 15: einen vierten Federring im Schnitt und
- Figur 16: eine schematische Darstellung eines fünften Federringes.

Der in den Figuren dargestellte Reibscheibendämpfer umfaßt eine Primärmasse 1, an welcher eine Kupplungsreibscheibe 10 befestigt ist. Die Primärmasse 1 wechselwirkt über zwei Reibscheiben 3' und 3'' sowie vier Dämpfungsfedern 4 und vier Vordämpferfedern 5 mit einer Sekundärmasse 2, die auf einer Nabe 20 eines Getriebegangs 21 angebracht ist.

Hierbei ist die Sekundärmasse 2 im wesentlichen scheibenförmig ausgebildet und in axialer Richtung beidseitig von je einer der Reibscheiben 3' und 3'' umgeben. Die Primärmasse 1 weist ebenfalls zwei Scheiben auf, die ihrerseits die beiden Reibscheiben 3' und 3'' hülsenartig umschließen.

Wie insbesondere den Figuren zwei bis vier entnehmbar, weist jede der Scheiben 4 Fenster auf, in denen die vier Dämpfungsfedern 4 angeordnet sind.

Darüber hinaus ist die Sekundärmasse 2 mit Mitnehmern 6 versehen, die an den vier Vordämpferfedern 5 angreifen, welche ihrerseits in Ausnehmungen der rechten Reibscheibe 3'' angeordnet sind.

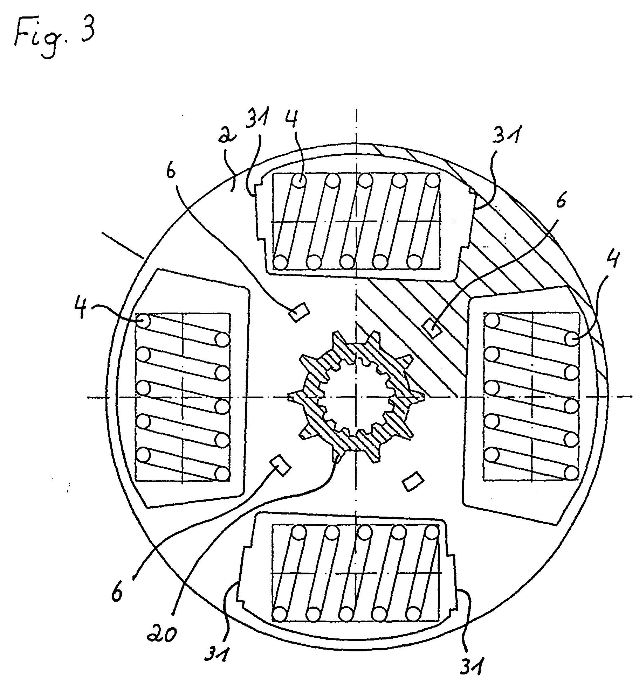

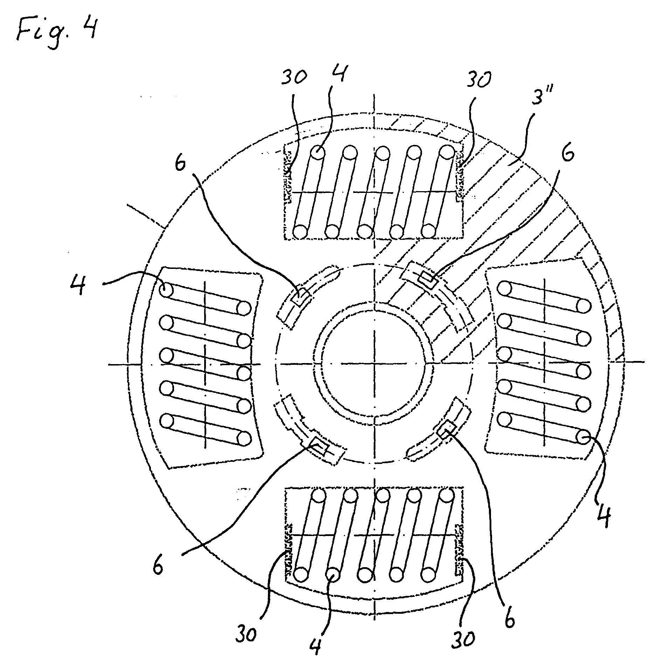

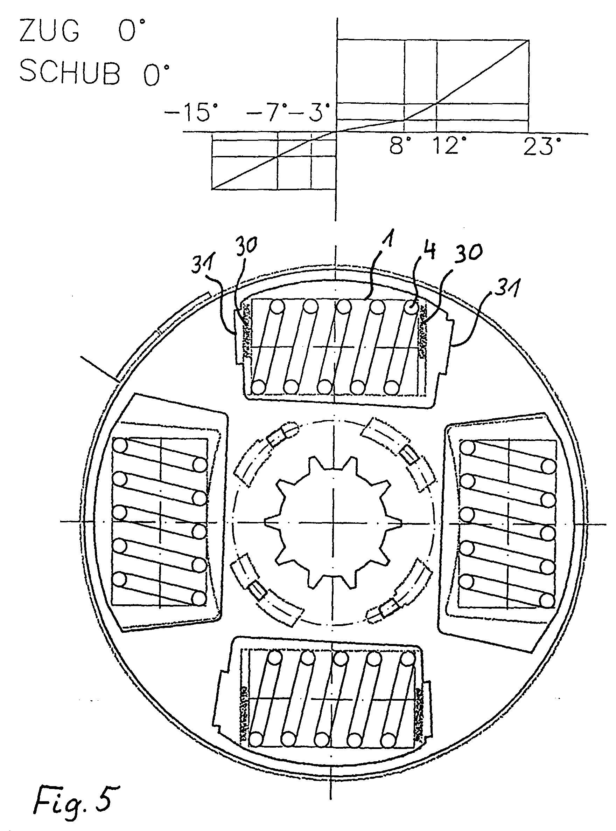

In zwei der Reibscheibenfenster für die Dämpfungsfedern 4 sind Anschläge 30 vorgesehen, die in entsprechende Ausnehmungen 31 in der Sekundärmasse 2 eingreifen können (siehe Figuren 3 und 4). Desweiteren sind die Anschläge 30 derart beabstandet, daß die entsprechenden Dämpfungsfedern 4 gerade in entspannten Zustand dazwischen Platz finden. Dasselbe gilt auch für sämtliche Fenster der Primärmasse 1. Die übrigen Fenster sind größer ausgestaltet, so daß sich die im nachfolgenden anhand der Figuren 5 bis 11 erläuterte Kräfteverteilung beim Verdrehen von Primärmasse 1 und Sekundärmasse 2 gegeneinander ergibt.

Dadurch das die Anschläge 30 und die Fenster in der Primärmasse 1 in ihrer Größe den entspannten Dämpfungsfedern 4 entsprechen, wenn der Reibscheibendämpfer nicht durch ein Drehmoment belastet wird, werden die Reibscheiben 3' und 3'' gegenüber der Primärmasse 1 in eine Neutralstellung ausgerichtet. Selbiges geschieht aufgrund der Vordämpferfedern 5 zwischen Sekundärmasse 2 und Reibscheiben 3', 3''. Insofern befindet sich der Reibscheibendämpfer, wenn er nicht durch ein Drehmoment belastet wird, in der in Figur 5 dargestellten Ausgangslage.

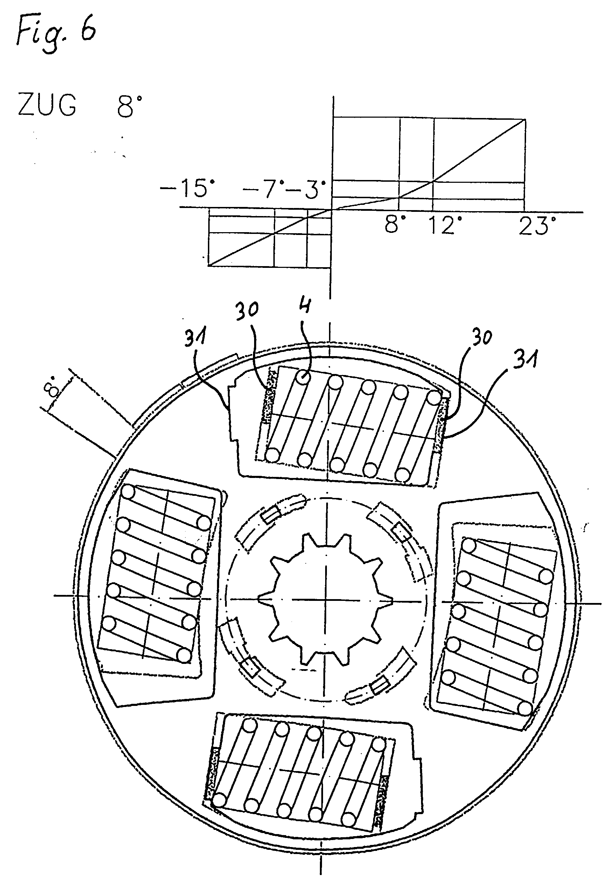

Wie in den Figuren 6 und 9 dargestellt, können sich die Reibscheiben 3', 3'' zwischen 8° bei Zug und -3° bei Schub bezüglich der Sekundärmasse 2 hin und her bewegen. Bei diesen Winkeln kommen die Anschläge 30 in den Ausnehmungen 31 der Sekundärmasse 2 zur Anlage und ein weiteres Verdrehen zwischen Reibscheiben 3' und 3'' und Sekundärmasse 2 ist ausgeschlossen. Ab diesen Winkelgraden kommen somit auch die Vordämpferfedern 5, die zwischen Reibscheiben 3' und 3'' und Sekundärmasse 2 wirken, nicht weiter zur Geltung.

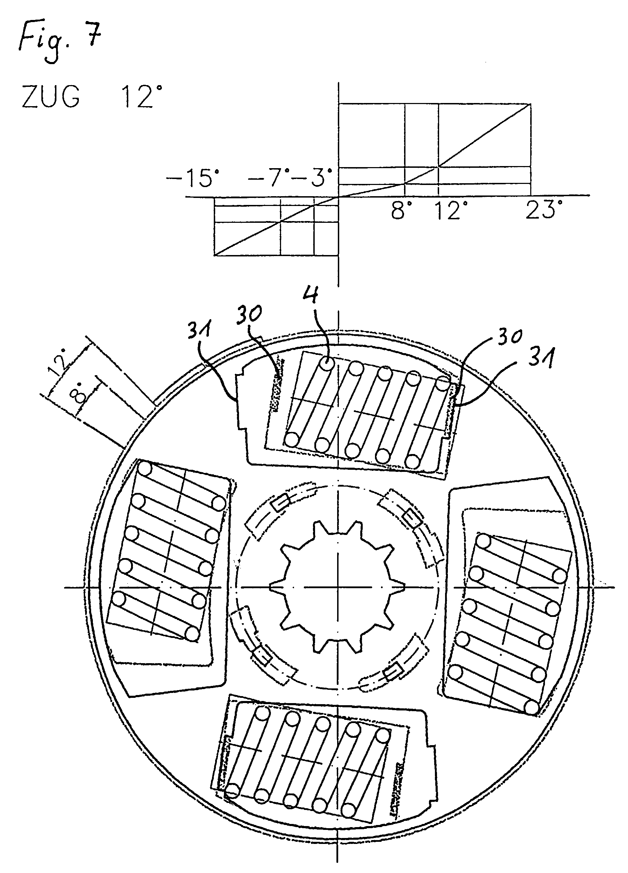

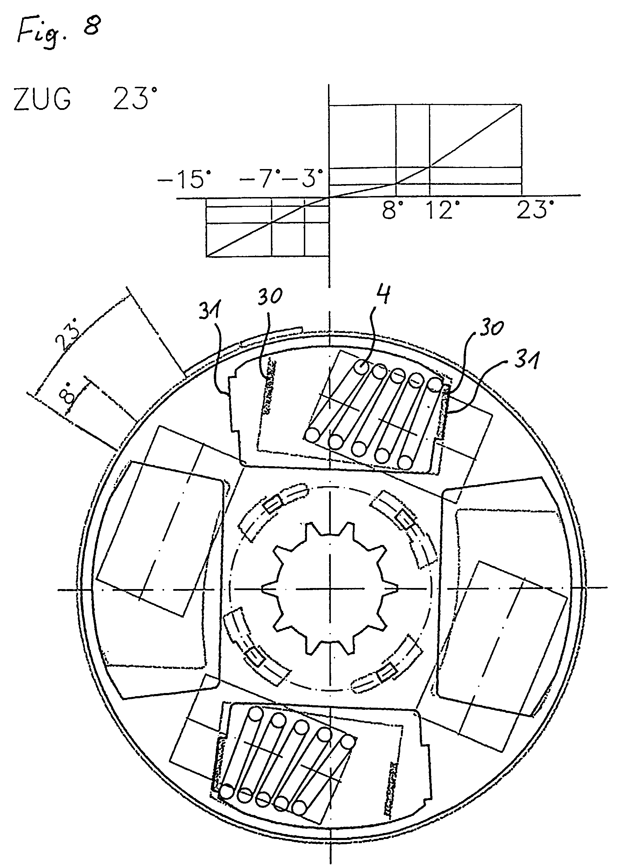

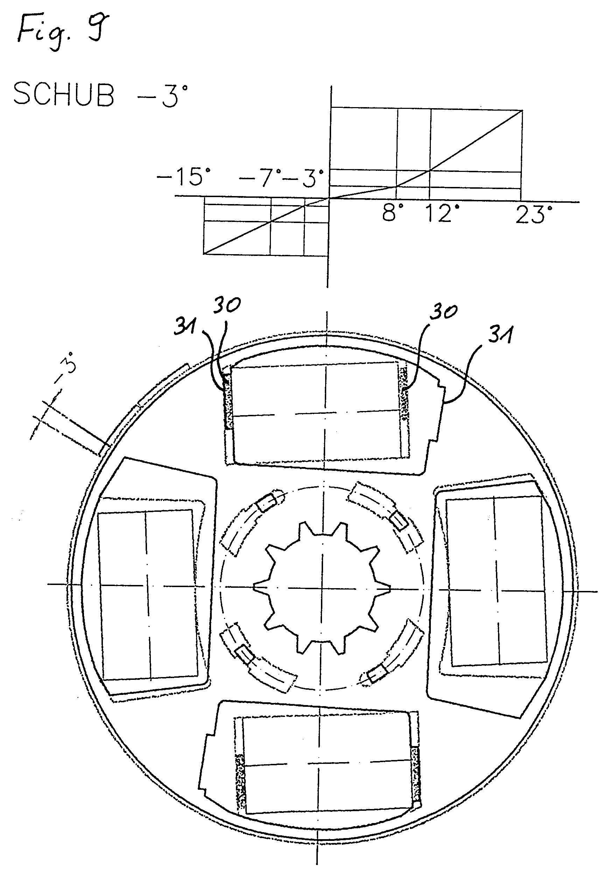

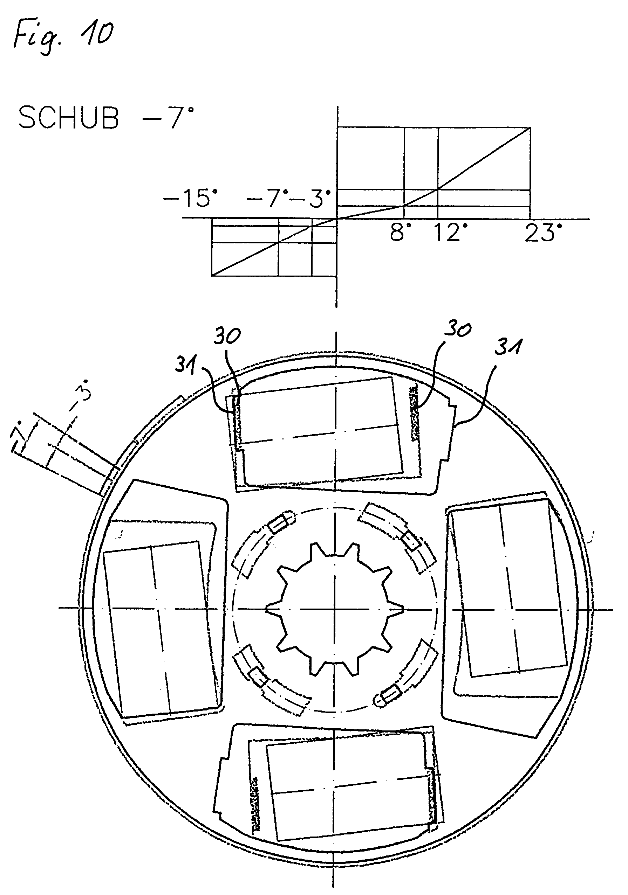

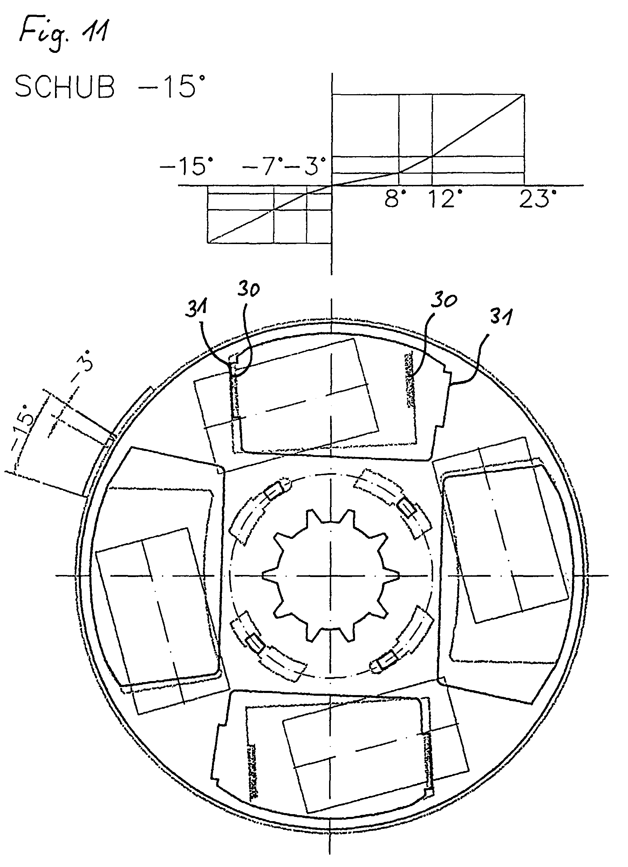

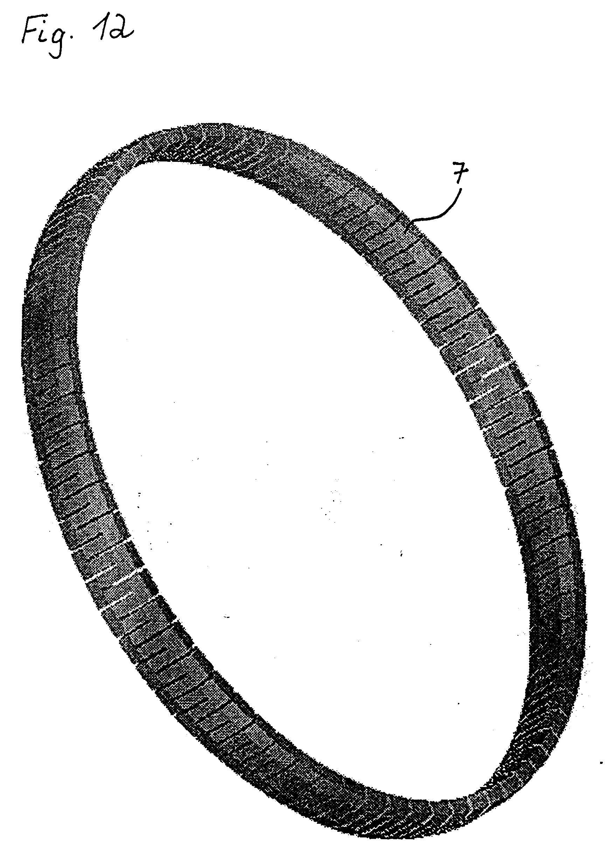

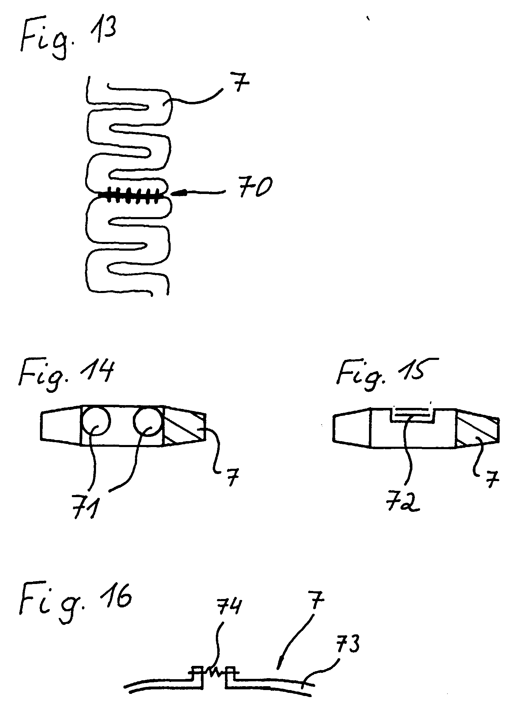

Bei größeren Verdrehwinkeln werden die Dämpfungsfedern 4 komprimiert (siehe Figuren 7, 8, 10 und 11). Hierbei sind die Fenster derart ausgestaltet, daß zunächst nur zwei der Dämpfungsfedern 4 komprimiert werden (siehe Figuren 7 und 10). Erst bei sehr hohen Verdrehwinkeln zwischen Primärmasse 1 und Sekundärmasse 2 werden dann sämtliche Dämpfungsfedern 4 komprimiert (siehe Figuren 8 und 11). Hierdurch lassen sich die effektiven Federkonstanten zwischen Primärmasse 1 und Sekundärmasse 2 besonders genau den Erfordernissen anpassen und in entsprechenden Stufen steigern.

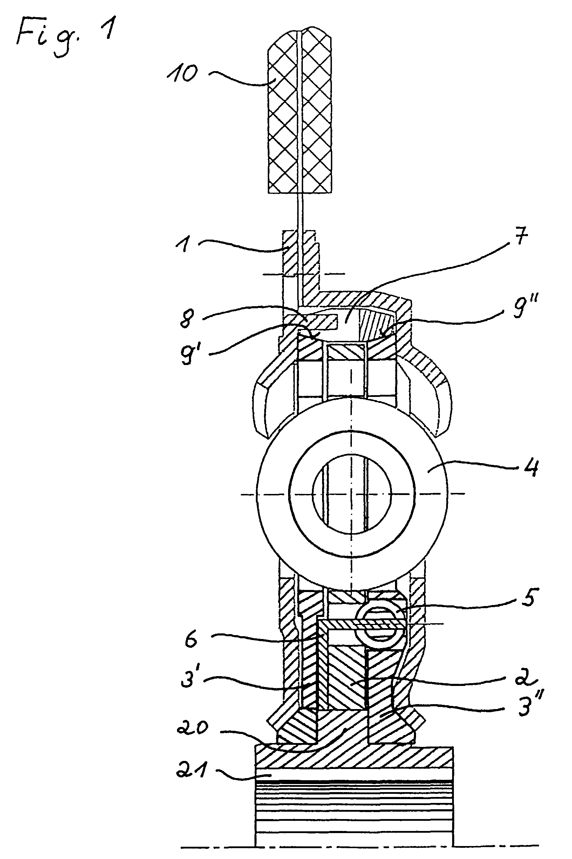

Eine entsprechend feine Einstellung der Reibung erfolgt in der Hauptsache durch einen Federring 7 (siehe Figur 1), der als drehzahlabhängiges Koppelelement die Reibscheiben 3' und 3'' mit der Primärmasse 1 koppelt. Hierzu liegt der Federring 7 an zwei im wesentlichen radial zu beaufschlagenden Anlagen 9' und 9'' der Reibscheiben 3' und 3'' an. Die beiden Anlagen 9' und 9'' sind derart ausgerichtet, daß sie eine Gesamtanlage mit einer konkaven Oberfläche bilden, in der der Federring 7 ruht. Der Federring 7 selbst weist einen konvexen Querschnitt auf, so daß er stabil an den Anlagen 9' und 9'' zur Anlage kommt und einfach montiert werden kann.

Desweiteren weist die Primärmasse 1 einen Mitnehmer 8 auf, der in den Federring 7 eingreift.

Bei niedrigen Drehzahlen liegt der Federring 7 an den Anlagen 9' und 9'' der Reibscheiben 3' und 3'' reibend an und koppelt auf diese Weise die Reibscheiben 3' und 3'' mit der Primärmasse 1. Insofern wird bei niedrigen Drehzahlen und Verdrehwinkeln zwischen -3° und +8° Grad, das Dämpfungsverhalten des Reibscheibendämpfers durch die Reibung zwischen Reibscheibe 3' und 3'' sowie der Sekundärmasse 2 und durch die Vordämpferfedern 5 beherrscht. Bei höheren Verdrehwinkeln und gleichwohl niedrigen Drehzahlen beherrschen dagegen die Dämpfungsfedern 4, sowie die Reibung zwischen Primärmasse 1 bzw. Federring 7 und den Reibscheiben 3' und 3'' das Dämpfungsverhalten.

Bei hohen Drehzahlen hingegen, hebt der Federring 7 von den Anlagen 9' und 9'' ab. Somit sind Primärmasse 1 und Reibscheiben 3' und 3'' entkoppelt. Es kommen somit bei hohen Drehzahlen und Verdrehwinkeln zwischen -3° und +8° Grad, sowohl Dämpfungsfedern 4 als auch Vordämpferfedern 5 und der niedrige Reibungskoeffizient zwischen Primärmasse und Reibscheiben 3' und 3'' zum Tragen. Bei höheren Verdrehwinkeln sind lediglich die Vordämpferfedern 5 an diesem charakteristischen Verhalten nicht mehr beteiligt. Insofern ist bei hohen Drehzahlen eine wesentlich geringere Reibung und somit eine wesentlich geringere Dämpfung gewährleistet, wie dieses auch von derartigen Reibscheibendämpfern gefordert ist.

Der in Figuren 1 und 12 dargestellte Federring besteht im wesentlichen aus einer meanderförmigen Vierkantschleife mit konvexer Oberfläche.

Andererseits kann als Federring 7 auch ein meanderförmiges Band Verwendung finden, wie in Figur 13 angedeutet. Zur Herstellung dieses Federrings 7 sind die Enden des meanderförmigen Bandes nach Figur 13 an einer Schweißstelle 70 miteinander verbunden.

Um die Federwirkung zu verstärken, kann der Federring 7 zusätzliche Federn umfassen. Dieses können zum Beispiel parallel zueinander angeordnete, den Federring 7 umlaufende Spiralfedern 71 (siehe Figur 14) oder auch Blattfedern 72 (siehe Figur 15) sein.

Die in Figur 16 dargestellte Ausführungsform eines Federrings 7 umfaßt ein geschlitztes Metallband 73, bei welchem die den Schlitz begrenzenden Enden durch eine Spiralfeder 74 zusammengezogen werden. Dieser letztere Federring 7 zeichnet sich durch seine besonders kostengünstige Herstellung und durch eine gute Anpaßbarkeit der Federkonstante aus. Die Federkonstante dieses Federrings 7 kann zum einen durch Variation der Spiralfeder 74 und zum anderen durch das Vorsehen weiterer Schlitze und Spiralfedern angepaßt werden.

## Patentansprüche

1. Reibscheibendämpfer mit einer Primärmasse (1) und einer Sekundärmasse (2), die über eine Reibeinrichtung (3', 3'') miteinander wechselwirken, wobei eine drehzahlabhängige Steuerung der Reibung vorgesehen ist, ***dadurch gekennzeichnet, daß*** die Reibeinrichtung (3', 3'') wenigstens eine im wesentlichen radial zu beaufschlagende Anlage (9', 9'') aufweist und die Reibungssteuerung wenigstens ein Federelement (7) umfaßt, welches mit drehzahlabhängiger Kraft im wesentlichen radial auf die Anlage (9', 9'') wirkt.

2. Reibscheibendämpfer nach Anspruch 1, ***dadurch gekennzeichnet, daß*** die Anlage (9', 9'') zumindest bei niedrigen Drehzahlen des Reibscheibendämpfers von radial außen durch das Federelement (7) beaufschlagt ist.

3. Reibscheibendämpfer nach Anspruch 1 oder 2, ***dadurch gekennzeichnet, daß*** die Reibeinrichtung (3', 3'') zumindest bei niedrigen Drehzahlen mit der Sekundärmasse (2) reibend wechselwirkt und mit der Primärmasse (1) antriebsverbunden ist.

4. Reibscheibendämpfer mit einer Primärmasse (1) und einer Sekundärmasse (2), die über eine Reibeinrichtung (3', 3'') miteinander wechselwirken, wobei eine drehzahlabhängige Steuerung der Reibung vorgesehen ist, insbesondere nach einem der Ansprüche 1 bis 3, ***dadurch gekennzeichnet, daß*** die Reibeinrichtung (3', 3'') reibend mit der Sekundärmasse (2) wechselwirkt und wenigstens um einen kleinen Winkel drehbeweglich bezüglich der Primärmasse (1) gelagert ist und daß die Reibungssteuerung wenigstens ein drehzahlabhängiges Koppelelement (7) zwischen der Primärmasse (1) und der Reibeinrichtung (3', 3'') umfaßt.

5. Reibscheibendämpfer nach Anspruch 4, ***dadurch gekennzeichnet, daß*** das drehzahlabhängige Koppelelement (7) ein radial wirksames Federelement (7) umfaßt.

6. Reibscheibendämpfer nach Anspruch 5, ***dadurch gekennzeichnet, daß*** das radial wirksame Federelement (7) radial von außen an einer Anlage (9', 9'') der Reibeinrichtung (3', 3'') und/oder der Primärmasse (1) anliegt.

7. Reibscheibendämpfer nach einem der Ansprüche 1 bis 3, 5 und 6, ***dadurch gekennzeichnet, daß*** das radial wirksame Federelement (7) durch einen Mitnehmer (8) der Primärmasse (1) oder der Reibeinrichtung (3', 3'') mit entweder der Primärmasse (1) oder der Reibeinrichtung (3', 3'') drehantriebsverbunden ist.

8. Reibscheibendämpfer nach einem der Ansprüche 1 bis 3 und 5 bis 7, ***dadurch gekennzeichnet, daß*** das radial wirksame Federelement (7) reibend an der im wesentlichen radial zu beaufschlagenden Anlage (9', 9'') angreift.

9. Reibscheibendämpfer nach einem der Ansprüche 1 bis 3 und 5 bis 8, ***dadurch gekennzeichnet, daß*** das Federelement (7) einen Federring umfaßt, der in radialer Richtung dehnbar ist.

10. Reibscheibendämpfer nach Anspruch 9, ***dadurch gekennzeichnet, daß*** der Federring einen geschlitzten, vorzugsweise metallischen, Ring (73) umfaßt.

11. Reibscheibendämpfer nach Anspruch 10, ***dadurch gekennzeichnet, daß*** der Federring eine Feder (74) umfaßt, die beidseits des Schlitzes an dem Ring (73) angebracht ist und die den Ring (73) an seinen den Schlitz begrenzenden Enden zusammenzieht.

12. Reibscheibendämpfer nach Anspruch 10 oder 11, ***dadurch gekennzeichnet, daß*** der geschlitzte Ring (73) radial außen von einer umlaufenden Feder, vorzugsweise einer Spiralfeder (71) oder einer Blattfeder (72), umschlossen ist.

13. Reibscheibendämpfer nach einem der Ansprüche 9 bis 12, ***dadurch gekennzeichnet, daß*** der Federring ein meanderförmiges Band oder eine meanderförmige Vierkantschleife umfaßt.

14. Reibscheibendämpfer nach einem der Ansprüche 9 bis 13, ***dadurch gekennzeichnet, daß*** der Federring eine umlaufende Feder, vorzugsweise eine Spiralfeder (71) oder eine Blattfeder (72) umfaßt.

15. Reibscheibendämpfer nach einem der Ansprüche 9 bis 14, ***dadurch gekennzeichnet, daß*** der Federring zumindest eine Baugruppe aus Messing oder einem Material mit einem Eigengewicht höher als Stahl aufweist.

16. Reibscheibendämpfer nach einem der Ansprüche 9 bis 15, ***dadurch gekennzeichnet, daß*** der Federring radial innen eine konvexe Oberfläche aufweist.

17. Reibscheibendämpfer nach einem der Ansprüche 9 bis 16, ***dadurch gekennzeichnet, daß*** die Anlage (9', 9'') der Reibeinrichtung (3', 3'') radial außen eine konkave Oberfläche aufweist.

18. Reibscheibendämpfer nach einem der Ansprüche 1 bis 17, ***dadurch gekennzeichnet, daß*** der Reibscheibendämpfer Mittel (30, 31) aufweist, die in wenigstens eine Richtung eine Relativdrehung zwischen Reibeinrichtung (3', 3'') und Sekundärmasse (2) begrenzen.

19. Reibscheibendämpfer nach Anspruch 18, ***dadurch gekennzeichnet, daß*** die Mittel (30, 31) zur Begrenzung einer Relativdrehung einen Anschlag (30) an der Reibeinrichtung (3', 3'') und einen Anschlag (31) an der Sekundärmasse (2) umfassen, die bei einem bestimmten Drehwinkel gegenseitig zur Anlage kommen.

20. Reibscheibendämpfer nach einem der Ansprüche 1 bis 19, ***dadurch gekennzeichnet, daß*** die Primärmasse (1) und Reibeinrichtung (3', 3'') über eine Federeinrichtung (4) wechselwirken, die derart ausgelegt ist, daß sie dazu neigt die Reibeinrichtung (3', 3'') in eine Ausgangslage bezüglich der Primärmasse (1) zu bringen.

21. Reibscheibendämpfer nach einem der Ansprüche 1 bis 20, ***dadurch gekennzeichnet, daß*** die Reibeinrichtung (3', 3'') eine Reibscheibe umfaßt.

22. Reibscheibendämpfer nach Anspruch 21, ***dadurch gekennzeichnet, daß*** die Reibscheibe mit einer radialen Fläche an der Sekundärmasse (2) reibt.

23. Reibscheibendämpfer nach Anspruch 21 oder 22, ***dadurch gekennzeichnet, daß*** die Reibscheibe in axialer Richtung weich ausgebildet ist.

24. Reibscheibendämpfer nach einem der Ansprüche 21 bis 23, ***dadurch gekennzeichnet, daß*** die Reibscheibe in ihrer Scheibenebene steif ausgebildet ist.
